# EUROPEAN PATENT APPLICATION

(11) **EP 2 271 097 A1**
(43) Date of publication of application: **05.01.2011**
(21) Application number: 09732568.2
(22) Date of filing: 16.04.2009
(51) Int. Cl.: H04N 7/173, H04L 12/66

(54) **GATEWAY DEVICE, METHOD, AND PROGRAM**

(30) Priority: 18.04.2008 JP 2008109301
(71) Applicant: NEC Corporation, Minato-ku Tokyo 108-8001 (JP)
(72) Inventor: OZAWA, Kazunori, Tokyo 108-8001 (JP)
(74) Representative: Glawe, Delfs, Moll
(86) International application number: PCT/JP2009/057689
(87) International publication number: WO 2009/128515

(57) **Abstract**

A gateway apparatus that is able to receive content over a network and that enables the content to be received by a mobile terminal connected over a radio link, is disclosed. A gateway apparatus (102) is connected to one or more of a television receiver, set top box, home server and mobile terminal from which the content may be transmitted and includes: a control and analysis unit (108) that receives information including capability of the mobile terminal and acquires codec, bit rate, resolution and file format regarding the decoding of input content including one or more of video, speech, and audio and compares the information acquired with the capability of the mobile terminal to determine whether or not conversion of the content is necessary; and a transcoder (109) that, in case it is determined that the conversion is necessary, converts one or more of codec, bit rate, resolution and file format of the content for adaptation to the capability of the mobile terminal and transmits the generated content to the mobile terminal over the radio network (Fig.1).

## Description

### TECHNICAL FIELD

### (Related application)

The present application claims priority rights based on the Japanese Patent Application 2008-109301, filed in Japan on April 18, 2008. The total disclosure of this Patent Application of the senior filing date is to be incorporated herein by reference.
This invention relates to a gateway apparatus and, more particularly, to a gateway apparatus in which content distributed to a terminal are converted for adaptation to the capability of the terminal, and a corresponding program.

### BACKGROUND ART

In recent years, as a system for compression encoding a moving picture for efficient transmission of a moving picture signal at a low bit rate, there have been known ITU-T (International Telecommunication Union Telecommunication Standardization) Recommendations H.263, and MPEG (Moving Picture Experts Group)-4. The MPEG-4 has been adopted as international standard by the ISO/IEC (International Organization for Standardization/ International Electrotechnical Commission).

On the other hand, H.264/ MPEG-4 AVC (Advanced Video Coding), internationally standardized by the ITU-T and ISO/IEC, is attracting attention as a system capable of transmitting a moving picture signal more efficiently than the aforementioned a moving picture compression encoding system. Hence, multimedia distribution, exploiting the NGN (Next Generation Network) or a mobile network, begins to be used widespread.

In case a moving picture signal is included in content including one or more of video, speech, and audio, it is necessary to transmit a setting of a moving picture codec that allows for decoding by the mobile terminal (the setting is hereinafter referred to as 'capability information') to the gateway apparatus at the time of call connection. As this protocol, IETF RFC2327 SDP (Session Description Protocol) may, for example, be used in case of transmission over an IP network. In case of transmission via a circuit switched network, the protocol prescribed by the ITU-T recommendations H.245, is used to transfer the information including the capability of a mobile terminal to the gateway apparatus.

Patent Document 1, for example, discloses a technique of converting information to be transmitted to a terminal and subsequently transmitting the so converted information to the terminal. In an arrangement shown in Patent Document 1, a network control unit determines whether or not information conversion is necessary with respect to a terminal, a call, a flow or a session. If it is determined that information conversion is necessary, the network control unit controls mediums of pre-conversion and post-conversion information, an encoding scheme, an encoding speed and so forth. An information conversion unit changes the mediums of the information transferred on the network, for example, changes a medium from speech to text or from a moving picture to a still picture or changes the quality of transmission on the same medium to allow for automatic switching of, for example, communication environments in response to a user environment.

Patent Document 2 discloses a system in which moving picture data and speech data for television broadcast are displayed via a browser on a mobile phone set. The moving picture data and speech data for television broadcast are initially transformed by a broadcasting station to a file format that may be distributed over the Internet, and are sent in this format to a gateway server. The gateway server transforms the file format to a preset format, such as by data transformation or data compression, and sends the data in this transformed format to the mobile phone terminal for display thereon.

Patent Document 3 discloses a content transforming system. The information transformed into the XHTML Basic format is transformed into content adapted for the mobile terminal. The format and the size of the picture data, downloaded from the Web, are transformed into the format adapted for the mobile terminal, and the content adapted for the mobile terminal are divided to data sizes corresponding to the picture image of the mobile terminal.

Patent Document 4 discloses a configuration in which an application gateway transforms content, acquired from an original server responsive to a content request sent out by a mobile terminal, in such a way as to fully exploit the performance or the capability of the mobile terminal. The application gateway transforms the content by referring to the parameters in the profile information that represent the performance as well as the capability of the mobile terminal. The transformation is to a markup language (ML), such as SGML, HTML or XTML, to another character set, or to another object or file.

Patent Document 5 discloses a system in which content data distributed form a content server are captured by an agent, and in which the format of the content data are transformed so as to be in meeting with the user terminal before transmitting the content to the user terminal.

Patent Document 6 discloses a broadcast system in which content is transformed to a file format reproducible by a mobile phone in accordance with the device information transmitted from the mobile terminal for transfer to the mobile terminal.

### PRIOR ART DOCUMENT

### PATENT DOCUMENT

[Patent Document 1]
   WO02/015630A
[Patent Document 2]
   JP Patent Kokai Publication No. JP2001-218273A
[Patent Document 3]
   JP Patent Kokai Publication No. JP2003-271508A
[Patent Document 4]
   JP Patent Kokai Publication No. JP2005-275534A
[Patent Document 5]
   JP Patent Kokai Publication No. JP2005-335149A
[Patent Document 6]
   JP Patent Kokai Publication No. JP2007-006148A

### DISCLOSURE OF THE INVENTION

### PROBLEMS TO BE SOLVED BY THE INVENTION

The following is the analysis of the related techniques from the side of the present invention.

In a system in which content is received by a gateway provided in a home and the like over a network and are decoded by a mobile terminal connected to the gateway over a radio link for display, if the moving picture information of the content is not coincident with the capability information of the mobile terminal, it becomes difficult for the mobile terminal to decode a moving picture stream. That is, such a problem may be met in which a moving picture cannot be displayed or becomes disturbed at the mobile terminal.

If there is non-coincidence in bit rate or picture image resolution, the picture is disturbed or otherwise significantly degraded in picture quality at the mobile terminal.

If there is non-coincidence in codec or file format, the content cannot be displayed at the mobile terminal.

The points of difference between the aforementioned Patent Documents and the invention disclosed in the present application are now summarized.

The invention disclosed in Patent Document 1 changes the medium, for example, changes the moving picture to a still picture, or changes the encoding system as well as the transmission rate. Hence, the invention disclosed in Patent Document 1 completely differs from the invention of the present application in which the information necessary for decoding the content being distributed is compared to the capability of the mobile terminal and parameters of the content as needed are transcoded.

The invention disclosed in Patent Document 2 is relative with a system in which picture processing, such as rendering, difficult to perform in real-time at the mobile terminal by reason of the limited CPU power, is performed by a gateway server before the image is transmitted to the mobile terminal. Hence, the invention disclosed in Patent Document 2 completely differs from the invention of the present application.

The invention disclosed in Patent Document 3 transforms the format and the size of the picture data, downloaded from the Web, in meeting with those of the mobile terminal, and hence completely differs from the invention of the present application.

The invention disclosed in Patent Document 4 transforms the markup languages (ML), such as SGML, HTML or XTML, character sets or objects (files), and hence completely differs from the invention of the present application.

The invention disclosed in Patent Document 5 is directed to format conversion, while the invention disclosed in Patent Document 6 is directed to conversion to a file format that allows for reproduction at the mobile terminal. These also differ completely from the invention of the present application.

It is therefore an object of the present invention to provide a gateway apparatus and corresponding method and program, in which, when content is received by a gateway apparatus and displayed on a mobile terminal, connected to the gateway apparatus over a radio link, the content may be transferred in a state adapted to the capability of the mobile terminal, in a manner that a moving picture, audio or speech may be reproduced to high display quality at the mobile terminal.

### MEANS TO SOLVE THE PROBLEMS

To solve the above problem, the invention disclosed by the present application may be summarized substantially as follows:

In accordance with one aspect of the present invention, there is provided a gateway apparatus which receives content including one or more of video, speech, and audio from a content server over a network and which transmits the received content over a radio network to a mobile terminal, the gateway apparatus comprising:
a control unit that receives information including capability of the mobile terminal from the mobile terminal, acquires information including codec, bit rate, resolution and file format, as information on decoding of content which is supplied from the content server and which includes one or more of video, speech, and audio, and compares the information acquired with the capability of the mobile terminal to determine whether or not conversion of the content is necessary; and
a conversion unit that in case it is determined that the conversion is necessary, converts one or more of the codec, bit rate, resolution and file format of the content, generates content adapted to the capability of the mobile terminal and transmits the so generated content to the mobile terminal over the radio network.

In accordance with another aspect of the present invention, there is provided a gateway apparatus to which is connected one or more of a television receiver, set top box, home server and mobile terminal and which transmits content including one or more of video, speech, and audio over a radio network to the mobile terminal, the gateway apparatus comprising:
a control unit that receives information including capability of the mobile terminal from the mobile terminal, acquires information including codec, bit rate, resolution, and file format, as information on decoding of content which includes one or more of video, speech, and audio and which is stored in the set top box or in the home server, and compares the information acquired with the capability of the mobile terminal to determine whether or not the conversion of the content is necessary; and
a conversion unit that in case it is determined that the conversion is necessary, converts one or more of the codec, bit rate, resolution and file format of the content, generates content adapted to the capability of the mobile terminal and transmits the so generated content over the radio network to the mobile terminal.

### EFFECT OF THE INVENTION

According to the present invention, in case of receiving content by a gateway apparatus and decoding the content by a mobile terminal connected over a radio link to the gateway apparatus for display, it is possible to transfer the content in a state adapted to the capability of the mobile terminal. The moving picture, audio, and speech of high quality may then be reproduced by the mobile terminal.

### BRIEF DESCRIPTION OF THE DRAWINGS

Fig.1 is a block diagram showing the configuration of a system of a first exemplary embodiment of the present invention.
Fig.2 is a block diagram showing the configuration of a transcoder of the first exemplary embodiment of the present invention.
Fig.3 is a block diagram showing the configuration of a system of a second exemplary embodiment of the present invention.
Fig.4 is a block diagram showing the configuration of a transcoder of the second exemplary embodiment of the present invention.

### EXPLANATIONS OF SYMBOLS

- 101: content server
- 102, 302: gateway apparatus
- 120: mobile terminal
- 104, 105: networks
- 107, 110, 307, 310: transmission/reception units
- 108: control and analysis unit
- 109, 309: transcoders
- 130, 330: radio networks
- 201: conversion control unit
- 202, 317: reception buffer
- 203, 315: file read unit
- 204, 314: transcoder unit
- 205, 313: file write unit
- 206, 316: switch unit
- 207, 312: transmission buffer
- 303: set top box
- 304: television receiver

### PREFERRED MODES FOR CARRYING OUT THE INVENTION

The present invention will now be described in further detail with reference to the accompanying drawings.

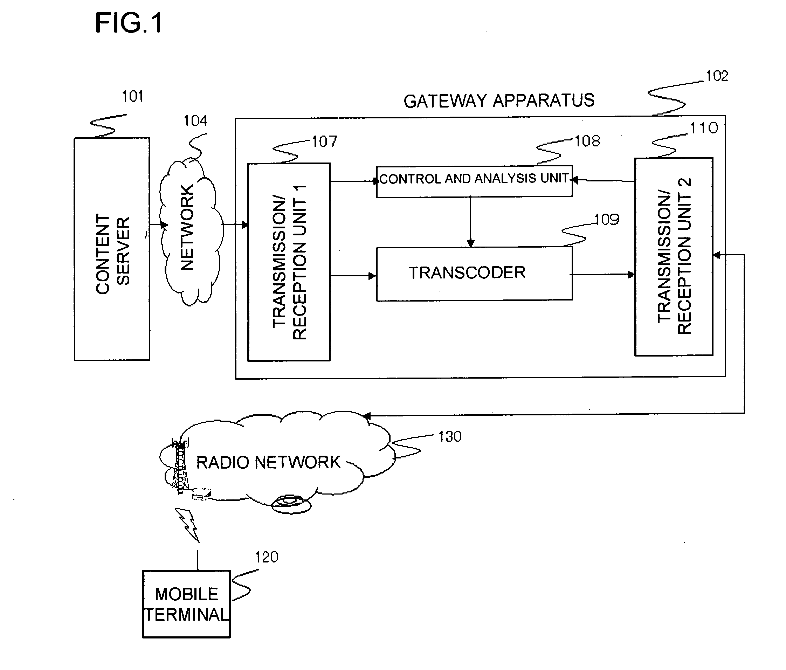

Referring to Fig.1, in a mode of the present invention, a gateway apparatus (102) receives content including one or more of a video, a speech and an audio from a content server (101) over a network, and transmits the received content over a radio network to a mobile terminal (120). The gateway apparatus comprises a control and analysis unit (108) and a conversion unit (transcoder) (109). The control and analysis unit receives the information including capability of the mobile terminal, from the mobile terminal (120). The control and analysis unit acquires, as the information on decoding of the content, including one or more of video, speech, and audio, delivered from the content server (101), the information including the codec, bit rate, resolution and the file format. The control and analysis unit compares the information acquired to the capability of the mobile terminal to determine whether or not conversion of the content is needed. The conversion unit (transcoder) (109) converts one or more of the codec, bit rate, resolution and file format of the content, in case the conversion has been determined to be needed, thereby generating content matched to the capability of the mobile terminal. The conversion unit (transcoder) sends the content generated to the mobile terminal over the radio network.

The control and analysis unit (108) receives and analyzes the information transmitted from the mobile terminal (120), in which the information includes capability information of the mobile terminal. The control and analysis unit acquires, from decoding information and file format of content, input from the content server (101), the information on a codec, bit rate, resolution and file format, and compares the information thus acquired with the capability of the mobile terminal. The decoding information and file format of content are input either in conjunction with or separately from the content. The content includes one or more of video, speech, and audio. In case one or more of the codec, bit rate, resolution and file format of the content does not meet with the capability of the mobile terminal, the control and analysis unit outputs a conversion instruction to the conversion unit. On receipt of the conversion instruction from the control and analysis unit (108), the conversion unit (109) applies transcode processing to the content with respect to the codec, bit rate, resolution or file format of the content which does not meet with the capability of the mobile terminal.

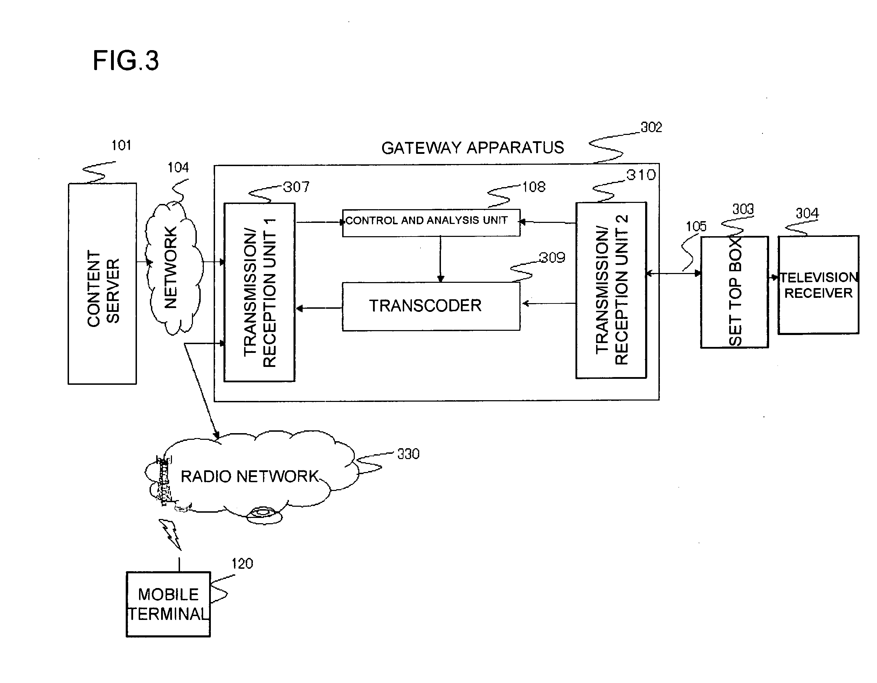

Referring to Fig.3, in another mode of the present invention, a gateway apparatus is connected one or more of a television receiver (304), a set top box (303), a home server and a mobile terminal (120), and sends content over a radio network to the mobile terminal (120). The content includes one or more of video, speech, and audio. The gateway apparatus comprises a control and analysis unit (108) and a conversion unit (transcoder) (309). The control and analysis unit receives the information including capability of the mobile terminal from the mobile terminal (102), and acquires, as the information for decoding the content, stored in the set top box (303) or in the home server, the information including that on the codec, bit rate, resolution or the file format. The control and analysis unit compares the information acquired to the capability of the mobile terminal to determine whether or not the conversion of the content is necessary. The content is stored in the set top box or in the home server and including one or more of video, speech, and audio. The conversion unit (transcoder) converts, in case the conversion has been determined to be needed, one or more of the codec, bit rate, resolution and file format of the content to generate content adapted to the capability of the mobile terminal to send the content thus generated over the radio network to the mobile terminal.

The control and analysis unit (108) receives and analyzes the information transmitted from the mobile terminal. The information includes information on capability of the mobile terminal. The control and analysis unit acquires, from the decoding information and file format of content, the information on the codec, bit rate, resolution and file format, and compares the information thus acquired with the capability of the mobile terminal. The content is stored in the set top box (303) or in the home server and contain one or more of video, speech, and audio. In case one or more of the codec, bit rate, resolution and file format of the content does not match the capability of the mobile terminal, the control and analysis unit issues a conversion instruction to the conversion unit (309). On receipt of the conversion instruction from the control and analysis unit (108), the conversion unit (309) applies transcode processing to the content with respect to the codec, bit rate, resolution or file format of the content that does not match the capability of the mobile terminal.

According to the present invention, in case the content received include one or more of the moving picture, still picture, audio and speech, the received content may be output to one or more of the television receiver, set top box and the home server. In addition, if, in case the same content is to be received and displayed on a mobile terminal, one or more of capability information such as codec, bit rate, picture image resolution and file format differs between the content and the mobile terminal, such capability information of the content may be converted in real-time to enable the same content to be received and decoded for display on the mobile terminal. This also renders it unnecessary to prepare a plurality of versions of the same content for the television receiver and for the mobile terminal.

Moreover, according to the present invention, if, in case the content for television, stored in one or more of the set top box and the home server, include one or more of moving picture, still picture, audio and speech, the same content is received and displayed on the mobile terminal, and one or more of codec, bit rate, picture image resolution and file format, as the capability information for the content differs from the corresponding capability information of the mobile terminal, such capability information of the content may be converted in real-time to enable the content to be received and decoded by the mobile terminal for display. This also renders it unnecessary to prepare a plurality of versions of the same content for the television receiver and for the mobile terminal.

In the exemplary embodiments to follow, the content includes a moving picture, and a transcoder is constituted by a gateway apparatus provided in a home. However, similar configurations may be used in case the content includes audio or speech.

### <Exemplary Embodiment 1>

Fig.1 depicts the configuration of a gateway apparatus of a first exemplary embodiment of the present invention. In Fig.1, a compression-encoded bit stream or file of content, including one or more of a moving picture, audio or speech, is stored in a content server 101.

A mobile terminal 120 sends a connection request over a radio network 130 to a gateway apparatus 102. At this time, the mobile terminal 120 transmits capability information of a terminal to the gateway apparatus 102. To transmit the capability information, RFC 2326 RTC (Real Time Control Protocol) or RFC 2327 SDP (Session Description Protocol), prescribed by IETF (Internet Engineering Task Force), for example, may be used. The radio network 130 may be a CS (circuit switched) network or an IP (Internet Protocol) network. In the following description, the radio network is presupposed to be an IP network.

The gateway apparatus 102 of the present exemplary embodiment will now be described. A transmission/reception unit 107 receives content from the content server 101 over a network 104.

A transmission/reception unit 110 receives the capability information of the mobile terminal 120 from the mobile terminal 120 via the radio network 130 to deliver the information to the control and analysis unit 108.

The control and analysis unit 108 receives and analyzes the capability information. If a moving picture is contained in the content, the content server 101 outputs a file format or the decoding information, necessary for decoding the moving picture data of the selected content, such as, for example, DCI (Decoder Configuration Information), to the transmission/reception unit 107, either separately or along with a moving picture stream or a moving picture file.

The transmission/reception unit 107 inputs the decoding information or the file format to output them to the control and analysis unit 108.

The control and analysis unit 108 compares the capability information from the mobile terminal 120, received from the transmission/reception unit 110, and codec, bit rate, picture image resolution or file format, relating to the moving picture, which is contained in the DCI information or the file format of moving picture data of content received from the transmission/reception unit 107, to each other.

In case the capability information from the mobile terminal 120 is not in meeting with one or more of the codec, bit rate, picture image resolution and file format, relating to the moving picture, the control and analysis unit 108 issues a transcoding instruction to the transcoder 109.

The transcoder 109 receives the instruction from the control and analysis unit 108 and inputs a moving picture stream of the content from the transmission/reception unit 107. The transcoder 109 transcodes parameter(s), that is, one or more of the codec, bit rate, picture image resolution and file format which is not in meeting with the capability information. The transcoder 109 outputs a transcoded output stream via the transmission/reception unit 110 and the radio network 130 to the mobile terminal 120. In Fig.1, the function and the processing of the transmission/reception units 107, 110, control and analysis unit 108 and the transcoder 109 may be implemented by a program which is executed on a computer (processor) that makes up the gateway apparatus 102. The same applies for the following exemplary embodiments as well.

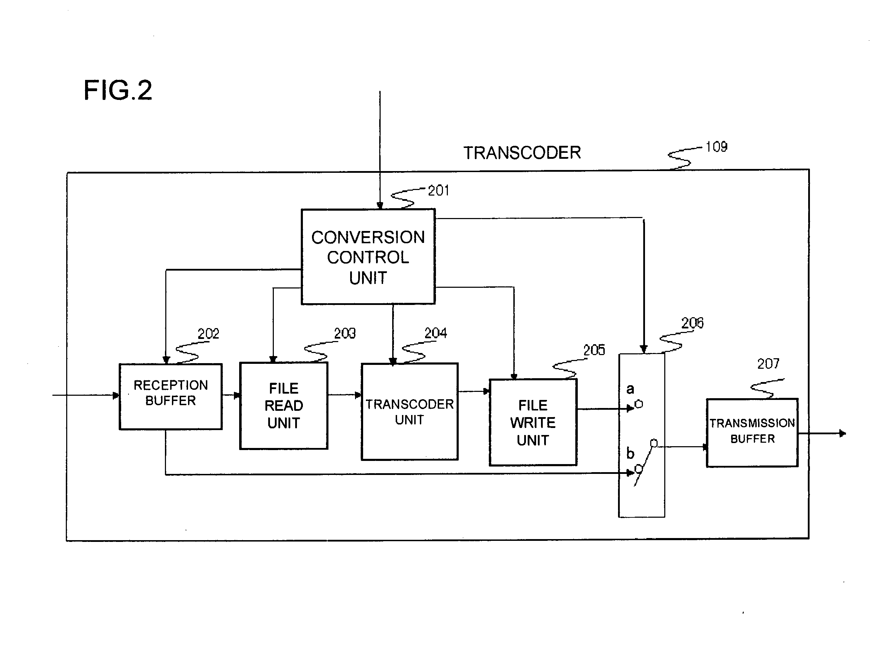

Fig.2 depicts an example configuration of the transcoder 109 of Fig.1. In Fig.2, a reception buffer 202 receives a moving picture data stream or a moving picture file, in terms of a preset size of data as a unit, from the transmission/reception unit 107 of Fig.1, for buffering therein.

A conversion control unit 201 receives the control information regarding the conversion from the control and analysis unit 108 of Fig.1, and first determines whether or not transcoding is to be carried out.

For example, if there is coincidence in each of four types of parameters, that is, codec, bit rate, picture image resolution, the conversion control unit 201 instructions the reception buffer 202 and a switch unit 206 not to perform transcoding.

In response to the instruction, the reception buffer 202 outputs the received moving picture data stream via the switch unit 206 to the transmission buffer 207 without doing any processing thereon. The transmission buffer 207 sends a moving picture stream.

If there is non-coincidence in one or more of the four types of parameters, the conversion control unit 201 determines which of the parameters is to be transcoded, and delivers a corresponding instruction.

As an example in which there is non-coincidence detected for each of codec, bit rate and picture image resolution, assume that the bit rate of the moving picture stream of content is MPEG-4, 128 kbps and the picture image resolution is CIF, but those on the terminal are H.263, 64 kbps and QCIF. In such case, the conversion control unit 201 sends an instruction to the reception buffer 202, file read unit 203, transcoder unit 204, file write unit 205 and the switch unit 206.

In case the content includes a data stream, the transcoder unit 204 receives an image data stream from the reception buffer 202, passing through the file read unit 203 and buffers the received image data stream.

In case the content includes a file, the file read unit 203 reads a moving picture stream which has been stored with the file format, as instructed by the conversion control unit 201 and delivers the so read stream to the transcoder unit 204.

The transcoder unit 204 transcodes bit rate, picture image resolution or codec of the moving picture data stream, as instructed by the conversion control unit 201, to output the resulting stream.

The file write unit 205 writes the transcoded moving picture stream in a file with the file format, as instructed by the conversion control unit 201. The switch unit 206 has an output connected to an input a and the file is supplied by each unit of a prescribed size to the transmission buffer 207.

The transmission buffer 207 transmits the content by each unit of a prescribed size.

In case it is not a file but a moving picture data file that is received by the reception buffer 202, the file read unit 203 and the file write unit 205 allow the file to pass therethrough without doing any processing thereon.

The moving picture codec used may be of the known type, such as H.263, MPEG-4 or H.264.

The file format may be of the known type, such as 3GP file format or the 3GP2 file format. This applies for the following exemplary embodiments as well.

With the present exemplary embodiment, in case the content includes one or more of the moving picture, audio and speech, the moving picture stream may be converted by the gateway apparatus so that the capability information, such as codec, bit rate, picture image resolution or file format, will be matched to various different terminals. A mobile terminal may receive these content via the gateway apparatus and decodes and displays the received content.

### <Exemplary Embodiment 2>

Fig.3 depicts the configuration of a second exemplary embodiment of the present invention. In Fig.3, parts or components which are the same as those of Fig.1 are indicated by the same reference numerals or symbols. In the following, the parts or components which are the same as those of Fig.1 perform the same operation as that of Fig.1, and hence the corresponding description is dispensed with.

In Fig.3, a set top box 303, connected to a television receiver 304, is connected to a transmission/reception unit 310 over a network 105.

The content received from the content server 101, and which are favorite content for the end user, are stored in the set top box 303.

A request for connection is sent from the mobile terminal 120 over a radio network 330 to a transmission/reception unit 307.

At this time, the mobile terminal 120 transmits the capability information of the terminal to a gateway apparatus 302. To transmit the capability information, RFC 2326 RTCP (Real Time Control Protocol) or RFC 2327 SDP (Session Description Protocol), as prescribed by IETF, may be used, for instance. The radio network 330 may be a CS (circuit switched) network or an IP (Internet Protocol) network. In the following description, the radio network is presupposed to be an IP network.

A gateway apparatus 302 of the present exemplary embodiment will now be described.

A transmission/reception unit 307 receives the capability information of the mobile terminal 120 from the mobile terminal 120 via the radio network 330 to deliver the information to the control and analysis unit 108. The control and analysis unit 108 receives and analyzes the capability information.

The transmission/reception unit 310 reads the content information (moving picture data stream or file) stored in the set top box 303, while reading the decoding information or the file format, for example, from one content to the next. The transmission/reception unit 310 supplies the so read content to the control and analysis unit 108.

The control and analysis unit 108 compares the capability information from the mobile terminal 120, received from the transmission/reception unit 307, with the codec, bit rate, picture image resolution or file format, relating the moving picture, contained in the DCI information or the file format of moving picture data of the content received from the transmission/reception unit 310. In case the capability information is not in meeting with one or more of the codec, bit rate, picture image resolution and file format, the control and analysis unit 108 issues a transcoding instruction to the transcoder 309.

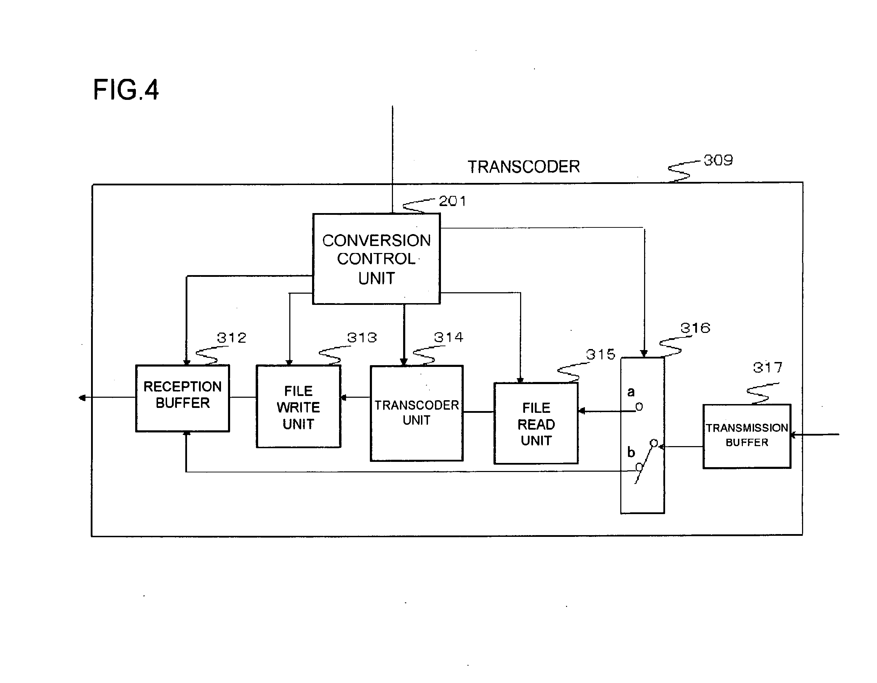

Fig.4 depicts a block diagram showing the configuration of the transcoder 309. In Fig.4, parts or components which are the same as those of Fig.2 are indicated by the same reference numerals or symbols. In the following, the parts or components which are the same as those of Fig.2 perform the same operation as that of Fig.2 and hence the corresponding description is dispensed with.

A reception buffer 317 receives a moving picture data stream or a moving picture file from the transmission/reception unit 310 of Fig.3, in terms of a preset size of data as a unit, for buffering therein.

The conversion control unit 201 receives the control information from the control and analysis unit 108 of Fig.3 and first determines whether or not the transcoding operation is to be carried out.

For example, if there is coincidence in each of four types of parameters, namely codec, bit rate, picture image resolution the file format, the conversion control unit 201 issues an instruction to the reception buffer 317 and to a switch unit 316 for not doing the transcoding operation.

In response thereto, the reception buffer 317 outputs the moving picture data stream, thus received, via the switch unit 316 to the reception buffer 312 without doing any processing thereon.

The transmission buffer 312 outputs a moving picture data stream.

If there is non-coincidence in one or more of the four types of parameters, the conversion control unit 201 determines on which of the parameters the processing of transcoding is to be performed, and outputs a corresponding instruction.

As an example in which there is non-coincidence detected for each of the codec, bit rate and picture image resolution, assume that the codec of the moving picture stream of content is MPEG-4, the bit rate is 128 kbps and the picture image resolution is CIF, but those of the terminal are H.263, 64 kbps and QCIF. In such case, the conversion control unit 201 sends a corresponding instruction to the reception buffer 317, file read unit 315, transcoder unit 314, file write unit 313 and switch unit 316.

In case the content includes a data stream, the transcoder unit 314 receives a picture image data stream from the reception buffer 317, passing through the file read unit 203 and buffers the received image data stream.

In case the content includes a file, the file read unit 315 reads a moving picture stream, which has been stored with the file format, as instructed by the conversion control unit 201, and delivers the so read stream to the transcoder unit 314.

The transcoder unit 314 transcodes the bit rate, picture image resolution or the codec of the moving picture data stream, as instructed by the conversion control unit 201, and outputs the resulting stream.

The file write unit 313 writes the transcoded moving picture stream in a file with the file format, as instructed by the conversion control unit 201. The file is supplied by each unit of a prescribed size to the transmission buffer 312. The transmission buffer 312 sends the file by each unit of a prescribed size.

If it is not the file but a moving picture data stream that is received by the reception buffer 317, the file read unit 315 and the file write unit 313 allow the stream to pass therethrough without doing any processing thereon.

According to the present invention, in case the content stored in a set top box or in a home server include one or more of the moving picture, audio and the speech, the gateway apparatus transforms the moving picture stream so that the content will be adapted to various mobile terminals differing in the capability information as exemplified by the codec, bit rate or picture image resolution. By so doing, it is possible for the mobile terminal to receive and decode the content via the gateway apparatus for display.

In the above exemplary embodiment, the content received from the content server 101 and which are favorite content for an end user may be stored by the end user in the set top box 303. It is however possible to install a new server for storing content and to connect the new server to the set top box 303. In this case, the gateway apparatus 302 is adapted to read the content stored in the server.

The disclosures of the aforementioned Patent Documents are incorporated by reference herein. The particular exemplary embodiments may be modified or adjusted within the gamut of the entire disclosure of the present invention, inclusive of claims, based on the fundamental technical concept of the invention. Further, variegated combinations or selection of elements disclosed herein may be made within the framework of the claims. That is, the present invention may encompass various modifications or corrections that may occur to those skilled in the art in accordance with the gamut of the entire disclosure of the present invention, inclusive of claim and the technical concept of the present invention.

## Claims

1. A gateway apparatus which receives content including one or more of video, speech, and audio from a content server over a network and which transmits the received content over a radio network to a mobile terminal, the gateway apparatus comprising:
a control unit that receives information including capability of the mobile terminal from the mobile terminal, acquires information including codec, bit rate, resolution and file format, as information on decoding of content which is supplied from the content server and which includes one or more of video, speech, and audio, and compares the information acquired with the capability of the mobile terminal to determine whether or not conversion of the content is necessary; and
a conversion unit that in case it is determined that the conversion is necessary, converts one or more of the codec, bit rate, resolution and file format of the content, generates content adapted to the capability of the mobile terminal and transmits the so generated content to the mobile terminal over the radio network.

2. The gateway according to claim 1, wherein the control unit receives and analyzes information which is transmitted from the mobile terminal and which includes the capability of the mobile terminal,
acquires information on codec, bit rate, resolution and file format, from decoding information and file format of content received in conjunction with or separately from the content from the content server, the content supplied from the content server including one or more of video, speech, and audio,
compares the information thus acquired with the capability of the mobile terminal, the content including one or more of video, speech, and audio, and
outputs a conversion instruction to the conversion unit, in case one or more of the codec, bit rate, resolution and file format of the content does not match the capability of the mobile terminal,
the conversion unit, on receipt of the conversion instruction from the control unit, transcodes the content for one or more of the codec, bit rate, resolution and file format of the content that do not match the capability of the mobile terminal.

3. A gateway apparatus to which is connected one or more of a television receiver, set top box, home server and mobile terminal and which transmits content including one or more of video, speech, and audio over a radio network to the mobile terminal, the gateway apparatus comprising:
a control unit that receives information including capability of the mobile terminal from the mobile terminal, acquires information including codec, bit rate, resolution, and file format, as information on decoding of content which includes one or more of video, speech, and audio and which is stored in the set top box or in the home server, and compares the information acquired with the capability of the mobile terminal to determine whether or not the conversion of the content is necessary; and
a conversion unit that in case it is determined that the conversion is necessary, converts one or more of the codec, bit rate, resolution and file format of the content, generates content adapted to the capability of the mobile terminal and transmits the so generated content over the radio network to the mobile terminal.

4. The gateway apparatus according to claim 3, wherein the control unit receives and analyzes the information which is transmitted from the mobile terminal and which includes the capability of the mobile terminal,
acquires information on codec, bit rate, resolution and file format, from decoding information and file format of content including one or more of video, speech, and audio and stored in the set top box or in the home server,
compares the information thus acquired with the capability of the mobile terminal, the content including one or more of video, speech, and audio, and
outputs a conversion instruction to the conversion unit, in case one or more of the codec, bit rate, resolution and file format of the content does not match the capability of the mobile terminal, and wherein
the conversion unit, on receipt of the conversion instruction from the control unit, transcodes the content for one or more of the codec, bit rate, resolution or the file format of the content that do not match the capability of the mobile terminal.

5. The gateway apparatus according to any one of claims 1 to 4, wherein the conversion unit includes:
a reception buffer that receives and temporally stores a moving picture data stream of the content;
a conversion control unit that receives control information regarding the conversion from the control unit and that outputs an instruction on whether or not processing of transcoding is to be executed, wherein in case there is coincidence between each parameter of codec, bit rate and resolution regarding a moving picture and that of the capability information of the mobile terminal, the conversion control unit sends an instruction for not executing the processing of transcoding, a moving picture data from the reception buffer being transmitted from a transmission/reception unit of the conversion unit over a network transmission link to the terminal without being processed, and
in case there is non-coincidence in at least one parameter of codec, bit rate and resolution regarding the moving picture and that of the capability information of the mobile terminal, the conversion control unit determines on which of the parameters the processing of transcoding is to be executed, and outputs a corresponding instruction, the conversion unit receives a moving picture data stream from the reception buffer and executes the processing of transcoding on any one of the parameters of bit rate, resolution and codec, as instructed by the conversion control unit to output a result;
a switch unit that selects and outputs one of the moving picture data stream from the reception buffer and a moving picture data stream transcoded by the conversion unit, based on the instruction from the conversion control unit; and
a transmission buffer that receives an output of the switch unit and that delivers the output by every prescribed size.

6. The gateway apparatus according to claim 5, wherein the conversion unit includes:
a file read unit that in case a moving picture stream is stored as a file in the reception buffer, reads a moving picture stream stored in a file format instructed by the conversion control unit, from the reception buffer, to output the moving picture stream thus read,
the transcoder unit transcoding a moving picture stream, read by the file read unit, based on an instruction from the conversion control unit; and
a file write unit that writes the moving picture stream, transcoded by the transcoder unit, with a file format specified by the conversion control unit in a file, wherein the switch unit selects, one of an output of the file write unit and an output of the reception buffer, based on an instruction from the conversion control unit, and outputs the selected output to the transmission buffer by every prescribed size.

7. A program for causing a computer included by a gateway which receives content including one or more of video, speech, and audio from a content server over a network and which transmits the received content over a radio network to a mobile terminal, to execute the processing comprising:
receiving information including capability of the mobile terminal from the mobile terminal, and acquiring information including codec, bit rate, resolution and file format, as the information on decoding of content which is supplied from the content server and which includes one or more of video, speech, and audio;
comparing the information acquired with the capability of the mobile terminal to determine whether or not conversion of the content is necessary; and
converting, in case it is determined that the conversion is necessary, one or more of the codec, bit rate, resolution and file format of the content to generate content adapted to the capability of the mobile terminal and transmitting the so generated content to the mobile terminal over the radio network.

8. A program for causing a computer included by a gateway which is connected to one or more of a set top box and a home server, and which transmits content including one or more of video, speech, and audio over a radio network to a mobile terminal, to execute the processing comprising:
receiving information including capability of the mobile terminal from the mobile terminal and acquiring information including codec, bit rate, resolution, and file format, as information on decoding of content which includes one or more of video, speech, and audio and which is stored in the set top box or in the home server;
comparing the information acquired with the capability of the mobile terminal to determine whether or not the conversion of the content is necessary; and
converting, in case it is determined that the conversion is necessary, one or more of the codec, bit rate, resolution and file format of the content to generate content adapted to the capability of the mobile terminal and transmitting the so generated content over the radio network to the mobile terminal.

9. A gateway apparatus to which is connected one or more of a television receiver, set top box and a home server and which receives content including one or more of video, speech, and audio to output the content to one or more of the television receiver, set top box and home server, the gateway apparatus comprising:
a control unit that exchanges information including capability of a mobile terminal with the mobile terminal; and
a conversion unit that receives information from the control unit and that determines whether or not conversion of the content received is necessary for adapting the content received to the capability of the mobile terminal, wherein in case it is determined that the conversion is necessary, the conversion unit, converts one or more of codec, bit rate, resolution and file format of the content in real-time, and transmits the so converted content over a radio network to the mobile terminal.

10. A gateway apparatus to which is connected one or more of a television receiver, a set top box and a home server and which receives content including one or more of video, speech, and audio to output the content to one or more of the television receiver, set top box and home server,
one or more of the television receiver, set top box and home server storing the content,
a mobile terminal being connected over a radio network to the gateway apparatus,
the gateway apparatus comprising:
a control unit that exchanges information, including capability of the mobile terminal, with the mobile terminal; and
a conversion unit that receives content including one or more of video, speech, and audio stored in the set top box or the home server and that receives information from the control unit, determines whether or not conversion of the content received is necessary for adapting the content received to the capability of the mobile terminal, wherein in case it is determined that the conversion is necessary, the conversion unit converts one or more of codec, bit rate, resolution and file format of the content in real-time, and transmits the so converted content over a radio network to the mobile terminal.

11. A program for causing a computer included by a gateway apparatus, to which is connected one or more of a television receiver, a set top box and a home server, and which receives content including one or more of video, speech, and audio to output the content to one or more of the television receiver, set top box and home server, to execute the processing comprising:
exchanging information including capability of a mobile terminal with the mobile terminal;
receiving information from the control unit and determining whether or not conversion of the content received is necessary for adapting the content received to the capability of the mobile terminal; and
converting, in case it is determined that the conversion is necessary, one or more of codec, bit rate, resolution and file format of the content in real-time to transmit the so converted content over a radio network to the mobile terminal.

12. A program for causing a computer included by a gateway apparatus, to which is connected one or more of a television receiver, a set top box and a home server and which receives content including one or more of video, speech, and audio to output the content to one or more of the television receiver, set top box and home server; one or more of the television receiver, set top box and home server storing the content; a mobile terminal being connected over a radio network to the gateway apparatus, to execute the processing comprising:
exchanging the information including capability of the terminal with the mobile terminal;
receiving content including one or more of video, speech, and audio stored in the set top box or the home server, and receiving the information from the control unit;
determining whether or not conversion of the content is necessary for adapting the content received to the capability of the mobile terminal; and
converting, in case it is determined that the conversion is necessary, one or more of the codec, bit rate, resolution and file format of the content in real-time to transmit the so converted content over a radio network to the mobile terminal.

13. A gateway method by a gateway which receives content including one or more of video, speech, and audio from a content server over a network and which transmits the received content over a radio network to a mobile terminal, the method comprising:
receiving information including capability of the mobile terminal from the mobile terminal;
acquiring information including codec, bit rate, resolution and file format, as information on decoding of content which is supplied from the content server and which includes one or more of video, speech, and audio;
comparing the information acquired with the capability of the mobile terminal to determine whether or not conversion of the content is necessary; and
converting, in case it is determined that the conversion is necessary, one or more of the codec, bit rate, resolution and file format of the content to generate content adapted to the capability of the mobile terminal and transmitting the so generated content to the mobile terminal over the radio network.

14. A gateway method by a gateway which is connected one or more of a television receiver, set top box, home server and mobile terminal and which transmits content including one or more of video, speech, and audio over a radio network to the mobile terminal, the method comprising:
receiving information including capability of the mobile terminal from the mobile terminal;
acquiring including codec, bit rate, resolution, and file format, as information on decoding of content which includes one or more of video, speech, and audio and which is stored in the set top box or in the home server;
comparing the information acquired with the capability of the mobile terminal to determine whether or not the conversion of the content is necessary; and
converting, in case it is determined that the conversion is necessary, one or more of the codec, bit rate, resolution and file format of the content to generate content adapted to the capability of the mobile terminal and transmitting the so generated content over the radio network to the mobile terminal.
